Europäisches Patentamt

European Patent Office

Office européen des brevets

(19)

(11) **EP 1 586 786 A1**

(12) **DEMANDE DE BREVET EUROPEEN**

(43) Date de publication:
 **19.10.2005 Bulletin 2005/42**

(51) Int Cl.⁷: **F16D 48/08**

(21) Numéro de dépôt: **05300132.7**

(22) Date de dépôt: **18.02.2005**

(84) Etats contractants désignés:
 **AT BE BG CH CY CZ DE DK EE ES FI FR GB GR HU IE IS IT LI LT LU MC NL PL PT RO SE SI SK TR**
 Etats d'extension désignés:
 **AL BA HR LV MK YU**

(30) Priorité: **25.02.2004 FR 0401912**

(71) Demandeur: **Renault**
 **92109 Boulogne Billancourt (FR)**

(72) Inventeur: **DESREUMAUX, Laurent**
 **92210, SAINT-CLOUD (FR)**

(54) **PROCEDE DE CONTROLE DU COUPLE TRANSMIS PAR UN EMBRAYAGE LORS DE LA MISE EN MOUVEMENT DU VEHICULE**

(57)    Procédé de contrôle du couple transmis par un embrayage en fonction de la volonté du conducteur et du régime moteur lors de la mise en mouvement d'un véhicule, caractérisé en ce que la consigne de couple transmis par l'embrayage est corrigée en fonction du couple moteur réellement disponible lorsque deux conditions sont remplies :

- la position de la pédale d'accélérateur dépasse un seuil d'enfoncement, et
- l'êcart entre le couple moyen effectif du moteur CME et un couple de référence $C_R$ est inférieur à un seuil d'écart.

FIG. 1

## Description

La présente invention concerne le contrôle des transmissions automatiques ou automatisées. Elle se rapporte à l'opératîon de mise en mouvement, ou décollage, d'un véhicule équipé d'une transmission automatique ou automatisée à rapports étagés ou à variation continue, équipée d'un embrayage commandé par un système de pilotage et de contrôle.

Plus précisément, cette invention a pour objet un procédé de contrôle du couple transmis par un embrayage en fonction de la volonté du conducteur et du régime moteur, lors de la mise en mouvement d'un véhicule.

Elle part de l'observation que la diminution du couple disponible, appelée aussi déchéance de couple, induite par des conditions extérieures (température de l'air, altitude ...), par des stratégies internes au contrôle moteur (régénération de filtre à particules, adaptation à la température d'eau moteur...), ou par le fonctionnement d'accessoires (climatisation, alternateur...), a un effet négatif sur les prestations de brio lors de la mise en mouvement du véhicule.

Selon les dispositions connues dans le domaine, la fonction de décollage des transmissions automatisées s'adapte en terme de confort et de dynamique à la volonté du conducteur (position de la pédale accélérateur) et au régime du moteur, par l'intermédiaire de cartographies qui définissent la consigne de couple d'embrayage à appliquer.

Toutefois, les cartographies utilisées ne tiennent pas compte des facteurs pouvant entraîner un écart, appelé « déchéance de couple », entre le couple souhaité, ou consigne de couple, et le couple effectivement disponible.

Par la publication US 4 943 921, on connaît une méthode de contrôle de transmission automatique prenant en compte une correction liée à l'altitude dans les décisions de passage. Toutefois, cette publication ne prévoit pas d'appliquer un tel critère à la gestion des situations de mise en mouvement du véhicule.

La présente invention vise à adapter la commande d'un embrayage de transmission à divers facteurs, afin de garantir un confort et un brio adopté à chaque circonstance.

Dans ce but, elle propose de corriger la consigne du couple d'embrayage, en appliquant un ratio qui quantifie la déchéance de couple moteur.

Conformément à l'invention, la valeur de couple d'embrayage est corrigée lorsque deux conditions sont remplies :

- la position de la pédale d'accélérateur dépasse un seuil d'enfoncement, et
- l'écart entre le couple moyen effectif du moteur et un couple de référence, est inférieur à un seuil d'écart.

Selon un mode de réalisation, le couple transmis par l'embrayage est corrigé en fonction de l'écart entre le couple moyen effectif du moteur, et un couple de référence.

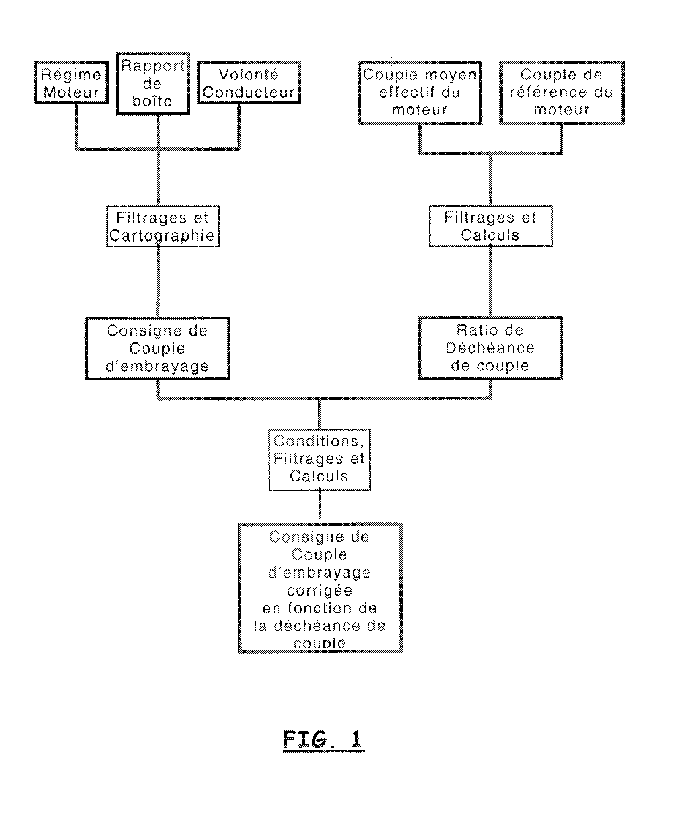

D'autres caractéristiques et avantages de l'invention, apparaîtront clairement à la lecture de la description savante d'un mode de réalisation non limitatif de celle-ci, en se reportant au dessin annexé sur lequel la figure 1 illustre l'algorithme général de calcul de la consigne de couple d'embrayage corrigé.

Comme indiqué ci-dessus, les facteurs pouvant entraîner une déchéance de couple sont liés à des conditions extérieures (température d'air, altitude...), à des stratégies internes au contrôle moteur (régénération de filtres à particules, adaptation à la température d'eau moteur...), ou au fonctionnement d'accessoires (climatisation, alternateur...).

On sait calculer la valeur du couple moyen effectif du moteur (couple estimé en sortie moteur déterminé par le contrôle moteur et envoyé au contrôleur de la transmission automatisée).

Il est aussi possible de calculer un couple de référence $C_R$, ou couple théoriquement disponible à chaque instant, notamment pendant les phases de mise en mouvement du véhicule. Ce calcul peut s'effectuer à partir d'une cartographie moteur, fonction de la position pédale et du régime moteur.

L'invention propose d'exploiter l'écart entre le couple effectif du moteur et un couple de référence, pour corriger le couple d'embrayage. La correction peut par exemple s'effectuer en appliquant à la valeur déterminée par les paramètres habituels, un facteur de correction.

Comme indiqué plus haut, cette correction vise à prendre en compte dans la commande de l'embrayage, divers facteurs pouvant dégrader la prestation du moteur lors de la mise en mouvement du véhicule, ces facteurs étant liés à des conditions extérieures (température de l'air, altitude ...), à des stratégies internes au contrôle moteur (régénération de filtre à particules, adaptation à la température d'eau moteur...), ou au fonctionnement d'accessoires (climatisation, alternateur...).

Conformément à l'invention, la correction est mise en oeuvre, lorsque les deux conditions suivantes sont remplies :

- la position de la pédale d'accélérateur dépasse un seuil d'enfoncement, et
- l'écart entre le couple moyen effectif du moteur un couple de référence est inférieur à un seuil d'écart.

Si une de ces deux conditions n'est pas remplie, la correction n'est pas appliquée, et le couple d'embrayage pour le décollage correspond à la commande de couple issue des cartographies en fonction de la volonté du conducteur et du régime moteur.

Le facteur de correction peut être de la forme (1 - kR). Dans cette expression R est un « ratio de déchéance de couple », égal au rapport de l'écart entre le couple moyen effectif CME et le couple de référence $C_R$, sur ce dernier.

Le ratio de déchéance de couple R est donc de la forme :

$$\frac{Couple\_référence - CME}{Couple\_référence}$$

R représente l'écart entre le couple moyen effectif du moteur CME, et un couple de référence $C_R$.

L'estimation du ratio de déchéance de couple R à partir de l'information « Couple Moyen Effectif (CME) » et d'un couple de référence $C_R$ peut être effectuée de différentes façons. Dans tous les cas, ce ratio peut avantageusement être filtré pour être mis en phase avec le couple moyen effectif du moteur CME.

Enfin k est un coefficient de calibration, compris par exemple entre 0 et 1,3 avec une résolution de 0,01.

Le couple de référence $C_R$, correspond à des conditions optimales de fonctionnement. Conformément à l'invention, il est calculé sur un point de fonctionnement du moteur permettant à celui-ci de fournir le couple demandé.

Comme indiqué sur la figure 1, on obtient la consigne de couple d'embrayage corrigé en fonction de la déchéance de couple par calcul en appliquant le ratio de déchéance de couple R, et en filtrant de préférence le résultat obtenu. Dans les algorithmes de pilotage, la correction proposée s'applique après les cartographies classiques, qui permettent de définir le couple d'embrayage en prenant en compte tous les paramètres habituels (régime moteur, position pédale accélérateur, rapport de décollage, filtrages), et juste avant la fermeture de l'embrayage, c'est à dire la transformation de ce couple d'embrayage, en « position d'embrayage » (pour les embrayages secs) ou en pression hydraulique (pour les embrayages humides).

On peut donc calculer la déchéance de couple par rapport à un couple de référence $C_R$, lui-même calculé conformément à l'invention à partir d'une cartographie moteur fonction de la position pédale et du régime moteur.

**Revendications**

1. Procédé de contrôle du couple transmis par un embrayage en fonction de la volonté du conducteur et du régime moteur lors de la mise en mouvement d'un véhicule, **caractérisé en ce que** la consigne de couple transmis par l'embrayage est corrigée lorsque deux conditions sont remplies :

   - la position de la pédale d'accélérateur dépasse un seuil d'enfoncement, et
   - l'écart entre le couple moyen effectif du moteur CME et un couple de référence $C_R$ est inférieur à un seuil d'écart.

2. Procédé de contrôle selon la revendication 1, **caractérisé en ce que** la correction est effectuée en appliquant à la consigne de couple d'embrayage un facteur de correction lié à un ratio de déchéance de couple R entre le couple effectif moyen du moteur CME et le couple de référence $C_R$.

3. Procédé de contrôle selon la revendication 2, **caractérisé en ce que** le couple de référence $C_R$ est calculé à partir d'une cartographie moteur fonction de la position pédale et du régime moteur.

4. Procédé de contrôle selon la revendication 2, 3 ou 4, **caractérisé en ce que** le ratio de déchéance de couple R est de la forme ($C_R$ - CME) / $C_R$.

5. Procédé de contrôle selon l'une des revendications 2 à 5, **caractérisé en ce que** le facteur de correction est de la forme (1 - kR).

**FIG. 1**

**Office européen des brevets**

# RAPPORT DE RECHERCHE EUROPEENNE

Numéro de la demande

EP 05 30 0132

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 1 072 459 A (RENAULT) 31 janvier 2001 (2001-01-31) * le document en entier * ----- | 1-5 | F16D48/08 |
| A | DE 102 30 612 A (LUK LAMELLEN & KUPPLUNGSBAU) 6 février 2003 (2003-02-06) * le document en entier * ----- | 1-3 | |
| A | WO 03/006842 A (PEREIRA GUILLIANO CARL JESUS ; LUK LAMELLEN & KUPPLUNGSBAU (DE); MOOSH) 23 janvier 2003 (2003-01-23) * page 3, ligne 26 - page 6, ligne 33 * * page 20, ligne 1 - page 21, ligne 26; figure 20 * ----- | 1,2 | |
| A | EP 1 065 401 A (FORD GLOBAL TECH INC) 3 janvier 2001 (2001-01-03) * abrégé; figure 1 * * alinéa [0018] - alinéa [0021]; figures 2a,2b * ----- | 1,2 | DOMAINES TECHNIQUES RECHERCHES (Int.Cl.7) |
| A | FR 2 822 205 A (LUK LAMELLEN & KUPPLUNGSBAU) 20 septembre 2002 (2002-09-20) * page 9, ligne 13 - page 11, ligne 22; figures 1,2 * ----- | 1,2 | F16D B60K |
| A | EP 1 078 805 A (SIEMENS AG) 28 février 2001 (2001-02-28) * alinéa [0031] - alinéa [0038] * * alinéa [0062] - alinéa [0065] * ----- | 1,2 | |

Le présent rapport a été établi pour toutes les revendications

| Lieu de la recherche | Date d'achèvement de la recherche | Examinateur |
|---|---|---|
| Berlin | 23 août 2005 | Gertig, I |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 30 0132

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-08-2005

| Document brevet cité au rapport de recherche | | Date de publication | Membre(s) de la famille de brevet(s) | | Date de publication |
|---|---|---|---|---|---|
| EP 1072459 | A | 31-01-2001 | FR | 2796894 A1 | 02-02-2001 |
| | | | EP | 1072459 A1 | 31-01-2001 |
| DE 10230612 | A | 06-02-2003 | DE | 10230612 A1 | 06-02-2003 |
| | | | BR | 0205734 A | 03-06-2003 |
| | | | WO | 03006842 A1 | 23-01-2003 |
| | | | DE | 10230611 A1 | 23-01-2003 |
| | | | DE | 10293056 D2 | 27-05-2004 |
| | | | EP | 1444448 A1 | 11-08-2004 |
| | | | FR | 2828659 A1 | 21-02-2003 |
| | | | IT | MI20021513 A1 | 12-01-2004 |
| | | | US | 2005071065 A1 | 31-03-2005 |
| WO 03006842 | A | 23-01-2003 | BR | 0205734 A | 03-06-2003 |
| | | | WO | 03006842 A1 | 23-01-2003 |
| | | | DE | 10230611 A1 | 23-01-2003 |
| | | | DE | 10230612 A1 | 06-02-2003 |
| | | | DE | 10293056 D2 | 27-05-2004 |
| | | | EP | 1444448 A1 | 11-08-2004 |
| | | | FR | 2828659 A1 | 21-02-2003 |
| | | | IT | MI20021513 A1 | 12-01-2004 |
| | | | US | 2005071065 A1 | 31-03-2005 |
| EP 1065401 | A | 03-01-2001 | DE | 10031771 A1 | 15-02-2001 |
| | | | EP | 1065401 A2 | 03-01-2001 |
| FR 2822205 | A | 20-09-2002 | BR | 0116734 A | 23-12-2003 |
| | | | WO | 02055905 A2 | 18-07-2002 |
| | | | DE | 10161983 A1 | 11-07-2002 |
| | | | DE | 10195839 D2 | 11-12-2003 |
| | | | FR | 2822205 A1 | 20-09-2002 |
| | | | IT | MI20020026 A1 | 09-07-2003 |
| | | | US | 2004063542 A1 | 01-04-2004 |
| EP 1078805 | A | 28-02-2001 | EP | 1078805 A1 | 28-02-2001 |
| | | | DE | 59906521 D1 | 11-09-2003 |
| | | | WO | 0114163 A1 | 01-03-2001 |
| | | | JP | 2003507247 T | 25-02-2003 |
| | | | US | 2002107626 A1 | 08-08-2002 |

EPO FORM P0460

Pour tout renseignement concernant cette annexe : voir Journal Officiel de l'Office européen des brevets, No.12/82